# NEW EUROPEAN PATENT SPECIFICATION

(11) **EP 0 360 354 B2**
(45) Date of publication and mention of the opposition decision: **14.04.2004**
(45) Mention of the grant of the patent: 10.03.1993
(21) Application number: 89202372.2
(22) Date of filing: 20.09.1989
(51) Int. Cl.: A01J 7/00

(54) **An implement for milking an animal as well as a method of connecting teat cups to the teats of same**
Vorrichtung zum Melken eines Tieres sowie zum Ansetzen der Melkbecher
Dispositif de traite d'un animal et procédé de mise en place de gobelets trayeurs

(30) Priority: 21.09.1988 NL 8802332
(43) Date of publication of application: 28.03.1990
(60) Divisional application: 91202449.4
(73) Proprietor: C. van der Lely N.V., 3155 PD Maasland (NL)
(72) Inventor: Van der Lely, Edwin, Maasland (NL); Van den Berg, Karel, Bleskensgraaf (NL)
(74) Representative: Corten, Maurice Jean F.M.

(56) References cited:
- EP-A- 0 091 892
- EP-A- 0 209 202
- EP-A- 0 213 660
- EP-A- 0 232 568
- EP-A- 0 258 938
- EP-A- 0 300 582
- EP-A- 0 323 875
- FR-A- 2 595 197

## Description

The present invention relates to an implement for milking an animal, e.g. a cow, which implement includes a robot arm adapted to carry on its end portion teat cups, and coupling means for applying each teat cup to a recevant teat of the animal's udder, while furthermore there are provided sensor means arranged on a movable member provided on the robot arm end portion, with the aid of which sensor means the position of the teats can be determined, as well as control means for conveying, on the basis of a teat position as determined by the sensor means, the robot arm in such a position under the animal's udder that a teat cup can be applied to the relevant teat. Such as implement as known from EP-A-6 209 202.

In automating the milking operation, in which the milking of cows may be effected without the presence of any operating staff or in the presence of supervising staff only, it is of the utmost importance that one of the most critical procedures, i.e. the application of the teat cups to the teats, is effected reliably and efficiently. In addition, a relatively cheap implement should be aimed at.

In actual practice, the luring of an animal to be milked to a milking parlour, more specifically by placing fodder therein, has been found not to be very difficult. Once the animal has arrived in the milking parlour, she can be positioned therein in the customary manner by providing a boundary at the front side thereof, in which situation the animal tends to bear against this boundary so as to try and reach with her head for a trough located farther away. When also the width of the milking parlour is restricted, the position of the animal ready to be milked is determined substantially. Once the animal has been positioned in the milking parlour, by means of an animal recognition system it is established which animal is present therein, whereafter the information available of the relevant animal can be utilized. This information includes inter alia the period of time elapsed since the animal was milked last, the dimensions of the animal, the approximate position of the teats on the udder, etc. On the basis of this information, the robot arm can then be adjusted to such a position that the sensor means can detect the teats with a high degree of probability. Depending on this detection, the robot arm can then be dispatched from its starting position to a desired position.

An implement with a movable sensor is known from the EP-A-0 300 582 filed prior to, but published later than the priority date of the present invention. In that European Patent Application the sensor and the teat cups are mounted on a robot arm end portion, which is slidable with respect to a further robot arm portion, with the consequence that the sensor, after the robot arm end portion having brought under the udder of the animal, has different positions relative to the front and rear teats, so that the position of the front and rear teats will be measured under different circumstances and with different accuracy. Therefore, a more complicated structure of the sensor and of the processing of the data supplied by the sensor will be required.

The invention has for its object to provide an implement for milking an animal, by means of which implement the position of the teats on the animal's udderrelative to the end of the robot arm, and hence relative to the relevant teat cups, can be determined in a comparatively simple and fast manner.

According to the invention, the implement of the above-defined type is characterized in that the movable member is displaceable along the robot arm end portion in the longitudinal direction thereof relative to said teat cups into at least two defined sensor active positions during the time that the teat cups are still carried by the robot arm end portion. The sensor means can be arranged such herein that the teats are observed accurately. It is preferred to have the movable member be constituted by a slide. The movable member is movable along the end of the robot arm portion in the longitudinal direction thereof. In addition, the sensor means is provided rotatably or in a specific embodiment pivotably on the said movable member. According to the invention, the movable member can be adjusted by means of the sensor means to a first position wherein the position of the front teats can be determined and to a second position for determining the position of the rear teats. The pivotability of the sensor means ensures that in both positions an accurate determination of the position of each time two teats is possible. in a preferred embodiment, the movable member is provided with pivotal means, with the aid of which the sensor means is pivotal through an angle which extends symmetrically relative to the longitudinal direction of the robot arm end portion. Preferably, this angle is in a range from 90° to 150° and in particular amounts to approximately 120°. The pivotal means may be constituted by a stepper motor and a pivotal mechanism for the sensor means driven thereby or by a bi-directionally controlable stepper motor.

According to the invention, the sensor means comprises at least one transmitter element accommodated in a housing which is secured on the movable member and includes a window, the scanning beam transmitted by the transmitter element being directed through the window and across the teat cups carried by the robot arm end portion, preferably in a substantially horizontal direction. In principle, the transmitter element may be constituted by a source of electromagnetic radiation having a suitably selected frequency. Besides infrared radiation elements, in a particularly favourable manner lasers may be used. With lasers, a very narrow scanning beam can be obtained, as well as a relatively high data rate. By using a laser in the sensor means, together with servo-pneumatic cylinders for controlling the robot arm, the system described here is rendered highly responsive, so that an efficient connection of the teat cups is also possible when the animal shows a restless behaviour. The laser is arranged in the housing in such a manner that either directly or via a reflecting element there is obtained a substantially horizontal scanning beam and consequently a most efficient determination of the position of a teat. According to the invention, the housing also accommodates a receiver element for detecting, through the window provided therein, a fraction of the scanning beam radiation dispersed by and/or reflected from an object, more specifically a teat of the animal's udder. In a preferred embodiment, there is provided in the housing, behind the window therein, a reflecting element, e.g. a flat mirror, for guiding the radiation incident into the housing through the window downwardly to the receiver element arranged in the lower part thereof. Preferably, the receiver element is constituted by a diode detector. Between the reflecting element and the receiver element there is arranged a converging lens. The mode of operation of the above-described sensor means is based on the principle that the scanning beam radiation, dispersed by and/or reflected from teats located at different distances from the sensor means, is incident with a relatively small angular difference onto the reflecting element in the housing and consequently via the lens onto a different location of the diode detector, so that the location where the radiation is focused to a greater or lesser extent on the diode detector determines the distance at which the relevant teat is located from the sensor means and consequently from the end of the robot arm.

In accordance with the invention, in order to be able to determine as accurately as possible the position of the teats, which are subjected to a continuous movement, it is furthermore advantageous for the sensor means to comprise two sensor elements which are arranged beside each other in such a manner that two distance measurements can be performed in a substantially horizontal plane. Once the position of the teats has been determined roughly, the rotational or pivotal movement can be stopped and the two beams transmitted by the separate sensor elements can be centered on one specific teat, as a result of which the position of the relevant teat relative to the robot arm end portion can still be measured. Upon movement, the relevant teat can be followed by controlling the sensor means, keeping the beams transmitted thereby centered on the teat, and controlling the robot arm; on the moment when the relevant teat cup is in the correct position under the teat, it can be connected. The sensor means may comprise two transmitters for parallel laser beams, or for ultrasonic beams of varying wavelength.

With the object of effecting an accurate teat position determination, both before and during the upward movement of the teat cups, in accordance with a further feature of the invention, it is advantageous for the coupling means, as well as the sensor means, to be arranged on the movable member. Preferably, the coupling means are arranged on the movable member near its end in front of the sensor means. In an advantageous embodiment, the coupling means are arranged pivotably, in which connection further pivotal means are provided on the movable member, with the aid of which the coupling means are pivotal through an angle which extends symmetrically relative to the longitudinal direction of the robot arm end between two angular positions. Preferably, the angle is in a range from 50° to 130° and in particular amounts to approximately 90°. When the teat cups intended for the rear teats are arranged on the robot arm end closer to each other th,an those intended for the front teats, the pivotal angle for connecting the rear and front teat cups may be selected differently, e.g. 60°, respectively 120°. The pivotal means may be constituted by a cylinder connected to the movable member, by means of which cylinder a pivoting mechanism provided on the lower part of the coupling means is controlled.

In an advantageous embodiment, according to the invention, in the tracking and connecting phase the movable member can be adjusted to a first position in which the position of the rear teats can be determined with the aid of the sensor means and in which the coupling means can engage the respective teat cups to be placed on the rear teats in angular positions determined by the pivotal means of the coupling means, and to a second position in which the position of the front teats can be determined with the aid of the sensor means and in which the coupling means can engage the respective teat cups to be placed on the front teats in the said angular positions. Therefore, by adjusting the movable member to the first and second position and by having the coupling means assume a first and a second angular position, the four teat cups required for milking a cow can be gripped sequentially. This gripping itself is effected by energizing an electromagnet forming part of the coupling means, which electromagnet is located in the two relevant angular positions of the coupling means directly in front of the relevant teat cups to be moved upwardly. The coupling means include an outer jacket to which the electromagnet is fitted, as well as a vertical inner jacket which is connected rigidly to the movable member, whereby it is possible for the outer jacket with the electromagnet, and consequently with a teat cup engaged thereby, to be moved in the upward direction.

In addition, on the movable member there are provided the control electronics and the data processing electronics, respectively, for the transmitter and receiver elements associated with the sensor means.

The invention furthermore relates to a method of connecting teat cups to the teats of the udder of an animal, e.g. a cow as described in claim 30.

Also according to the invention, the position determination and the controlling of the robot arm end portion under the animal's udder are effected by means of a microprocessor, to which are supplied data regarding the objects detected by the sensor means, data regarding teat positioning from the animal recognition data source as well as the actual position of the cylinders of the robot arm, on the basis of which data the desired position of the said cylinders in the two phases is determined by the microprocessor. In the first phase, the position of the teats is determined during an upward movement of the sensor means from a position under and in the middle in front of a relevant pair of teats, the scanning beam of the sensor means extending substantially in a horizontal plane. The sensor means may be arranged such that they are movably upwardly relative to the robot arm end or they may be mounted rigidly thereon, so that they are moved upwardly togethertherewith. As soon as the data received by the sensor means have been processed, which, according to the invention, may be effected in a separate microprocessor, and these data have been recognized as originating from the animal's teats, then the upward movement of the sensor means can be stopped already and it will be possible to proceed to the second phase, i.e. the tracking and connecting phase.

For a better understanding of the present invention and to show how the same may be carried into effect, reference will now be made, by way of example, to the accompanying drawings, in which:
Figure 1 is a side view of a robot arm arranged at the side of a milking parlour;
Figure 2 is a plan view of the robot arm;
Figure 3 is a side view of part of the robot arm as shown in Figure 2;
Figure 4 is a plan view of the end of the robot arm;
Figure 5 is a side view of the robot arm end as shown in Figure 4;
Figure 6 is a partial cross-sectional view taken on the line VI - VI in Figure 4;
Figure 7 shows a laser arrangement with associated electric and electronic elements;
Figure 8 shows a diagram in illustration of the position of the teats relative to the parameters describing the laser,
Figure 9 shows a block diagram of a circuit for controlling the connection of the teat cups to the teats of an animal's udder;
Figure 10 shows a flow diagram of the teat searching procedure effected in the microprocessor constituting part of the circuit shown in Figure 9, and

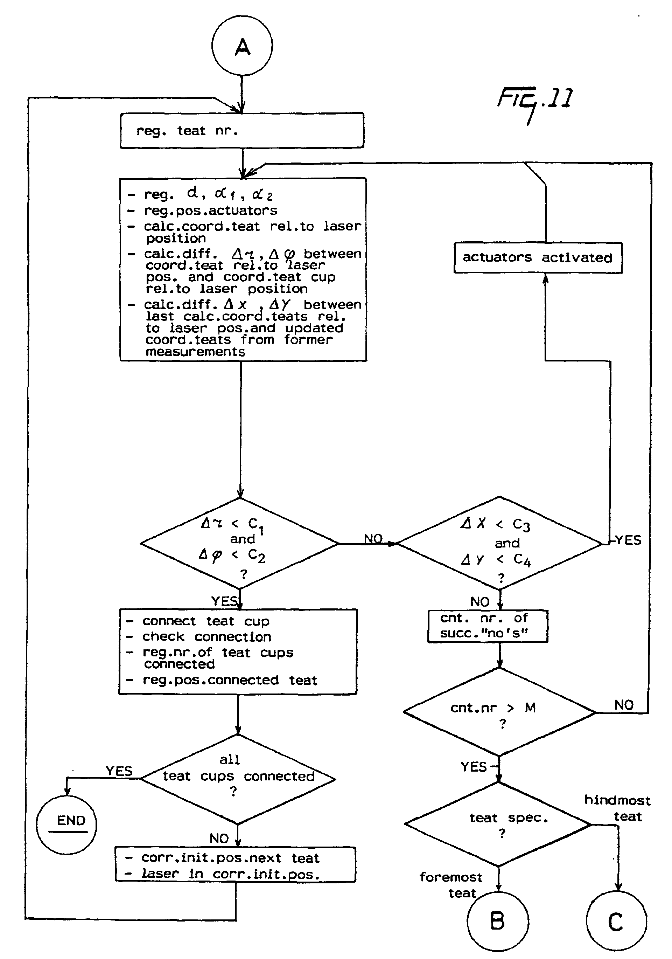

Figure 11 shows a flow diagram of the teat tracking procedure effected in the microprocessor constituting part of the circuit shown in Figure 9.

In the drawings, corresponding components have been denoted by the same reference numerals. In addition, the invention is not limited to the embodiment as shown and described here, which embodiment only serves to illustrate the inventive idea.

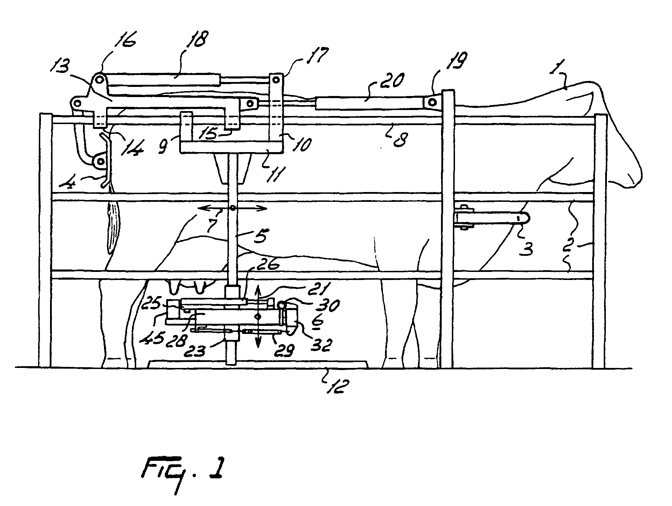

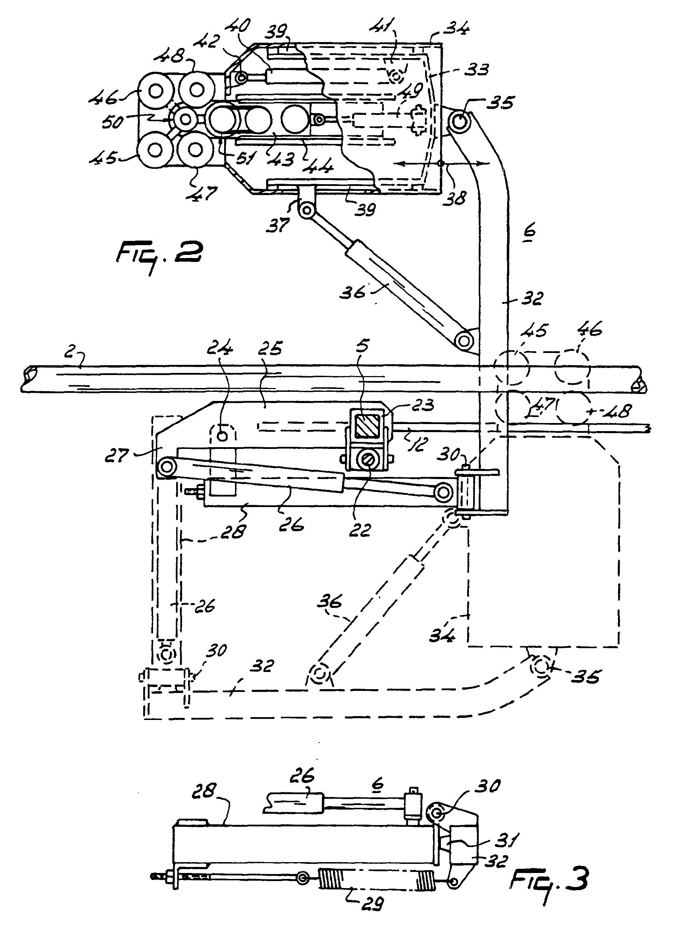

In Figures 1 and 2, the robot arm according to the invention is shown; this robot arm is arranged at the side of a milking parlour. Once an animal to be milked has arrived in the milking parlour and has been positioned appropriately therein, the robot arm is moved, on the basis of animal recognition data, from the front side to under the animal's udder.

In the side view of the implement of Figure 1 there is shown an animal 1 which is present in the milking parlour, the milking parlour being enclosed by a railing 2 which limits the freedom of movement of the animal 1 in a lateral direction. The milking parlour is entered by the animal from the rear, while a pivotal stop 3 is arranged near the front side, which stop 3 constitutes a boundaryforthe animal 1 in the forward direction. By providing the front side of the milking parlour with e.g. a feed unit, the animal will advance sufficiently far, i.e. until against the stop 3.

The milking parlour floor has a recess, which is arranged such that the animal will not put her hind feetthereon, e.g. because its bottom extends obliquely inwardly and downwardly, so that the hind legs of the animal are wide apart and on either side of the recess. The recess may have a drain for discharging the animal's excrements, if any.

Once the animal has entered the milking parlour, a sensor device 4 is pivoted against her rear side. At the side of the milking parlour there is arranged a substantially vertical frame beam 5, which frame beam 5 at its upper end is provided with a longitudinal guide means and to which near its lower end a robot arm 6 is fitted. The vertical frame beam 5 is capable of moving with respect to the milking parlour in the longitudinal direction as denoted by the arrows 7. For that purpose, the railing is provided with a guide rod 8, along which can move two interconnected slide blocks 9, 10, the said slide blocks 9, 10 being interconnected by means of a horizontal frame beam 11 secured to the vertical frame beam 5. Near the floor, the frame beam 5 is guided by a guide rail 12, along which the lower portion of frame beam 5 slides.

The sensor device 4 is connected pivotably to a slide element 13 which by means of two slide blocks 14, 15 is arranged also slidably along the guide rod 8. Between two lugs 16, 17 there is arranged, rigidly connected to the slide element 13 and the slide block 10, respectively, a cylinder 18, while furthermore between the slide element 13 and a support 19 on the railing 2 there is arranged a cylinder 20. By operating the cylinder 20, the sensor device 4 can be moved towards the animal until, in the downward position, it bears against the animal's rear. In the present embodiment, the sensor device, and hence the animal's rear, determines the reference position, relative to which the position of the teats and that of the milking robot are determined. By moving the sensor device 4 towards the animal, it is also possible to move the frame beam 5, as a result of which the mutual positioning between the sensor device 4 and the frame beam 5 can be provided adjustably by means of the cylinder 18.

A robot arm 6 is connected slidably in height (arrows 21) to the frame beam 5. The sliding movement in height is effected by means of a cylinder 22, the one end of which is connected to the frame beams 5 and 11 in the place where the said frame beams are interconnected. The other end of the cylinder 22 is connected to a slide block 23 which is capable of moving in height along the frame beam 5 in dependence on the operation of the cylinder 22.

Figure 2 shows the robot arm 6 both in the rest position (interrupted lines) and in the operational position (uninterrupted lines). The robot arm 6 is connected capably of pivoting about a substantially vertical pivot pin 24 to the frame portion 25 which is attached to the slide block 23. This pivotal movement is effected by means of a cylinder 26 which has one end connected to a support 27 of the frame portion 25 and the other end to the first portion 28 of the robot arm 6. It will be obvious that, by operating the cylinder 26, the robot arm 6 can be pivoted from the rest position to the operational position and vice versa. It may be of importance for the robot arm, or a part thereof, to be fixed under spring load, i.e. in such a manner that it, or the said portion thereof, can deflect when e.g. the animal kicks against it. In this embodiment, this can be achieved by having the further portion of the robot arm 6 arranged capably of pivoting relative to the first portion thereof about a pin 30 against the action of an excess load spring 29. In the unloaded condition, the further portion of the robot arm 6 is pulled against the first portion 28 of the robot arm 6 by the intermediary of a rubber buffer 31 (see Figure 3).

The further portion of the robot arm 6 consists of a second portion 32, a third portion 33 and a fourth portion 34. The third portion 33 of the robot arm 6 is connected capably of pivoting about a pivot pin 35 to the said second portion 32. The pivotal movement about the pivot pin 35 is effected by means of a cylinder 36, the one end of which is connected to the second portion 32 of the robot arm 6 and the other end to a support 37 on the third portion 33 of the robot arm 6. As is apparent from Figure 2, by means of the cylinder 26, the robot arm can be moved to under the animal present in the milking parlour, the pivot pin 35 being approximately in a central position under the animal, i.e. between the animal's front and rear legs. Thereafter, by operating the cylinder 36, the third portion 33 of the robot arm 6 can be pivoted about the pivot pin 35 at a desired angle.

The fourth portion 34 of the robot arm 6 (i.e. the end thereof) is movable axially relative to the third portion 33, as is indicated by arrows 38. In this connection, the support 37 is movable in a slot-shaped aperture provided on the side of the fourth portion 34 of the robot arm 6.

In the inserted condition, the third portion 33 of the robot arm 6 is located partly within the end 34 of the robot arm 6. The end 34 of the robot arm 6 being slidable relative to the third portion 33, it is provided with rails 39. Between the mutually slidable portions 33 and 34 there is arranged a cylinder40, the one end of which is connected via a support 41 to the third portion 33 of the robot arm 6 and the other end via a support 42 to the end 34 thereof.

The end 34 of the robot arm 6 can be adjusted in the longitudinal direction under the animal by means of both the cylinder 40 and the cylinder 18. Although in this connection it would be sufficient to use the cylinder 40, it will be possible, by the addition of the cylinder 18, to limit the stroke of the former considerably, which, in view of the restricted space under the animal, is highly advantageous.

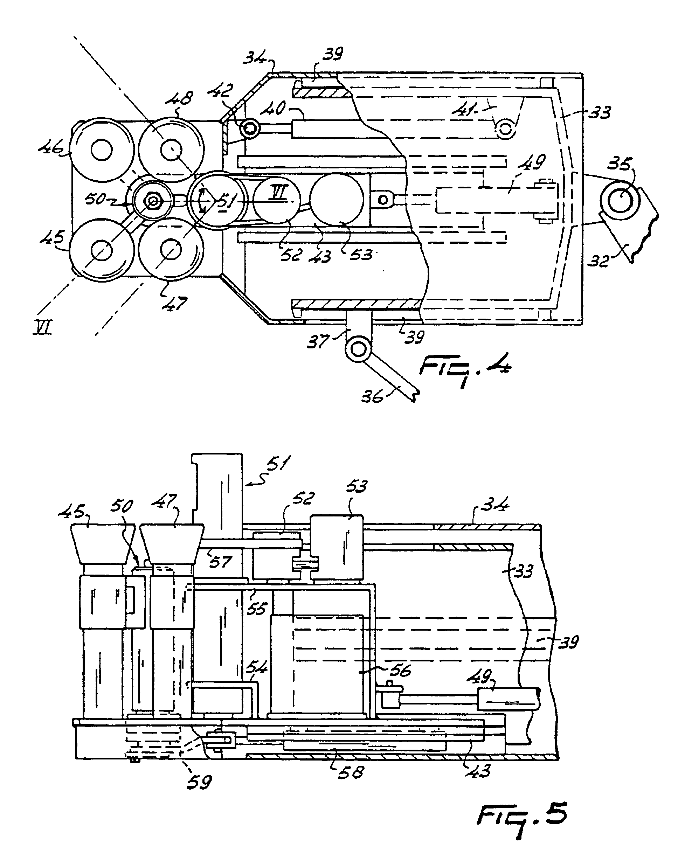

The end 34 of the robot arm 6 is provided with a slide 43 which by means of rails 44 is movable along the robot arm end 34 in the longitudinal direction. Teat cups 45, 46, 47 and 48 are provided at the end 34 of the robot arm 6, in which situation, since the robot arm 6 approaches the animal's udder from the front side, the teat cups 45 and 46 are intended for connection to the animal's rear teats and the teat cups 47 and 48 to the front teats. The teat cups 45 to 48 are arranged such that the slide 43 can move at least between the teats cups 47 and 48. The slide 43 is capable of reciprocating by means of a cylinder 49, one end of which is connected to the slide 43 and the other end to the end 34 of the robot arm 6. On the slide there are provided, taken from the left to the right in Figure 4: coupling means 50, sensor means 51, a pivotal mechanism 52 and a stepper motor 53, the last two units together constituting the pivotal means for the sensor means 51. In the embodiment shown in Figure 7, these pivotal means are constituted by a bi-directionally controlable stepper motor. The sensor means 51 are secured on the slide 43 by means of supporting plates 54 and 55 (see Figure 5). The pivotal means 52, 53 are arranged on the supporting plate 55. In addition, the slide 43 is provided, under the supporting plate 55, with the sensor electronics 56 required for the sensor means 51.

The sensor means 51 are mounted such that they are pivotal through a pivotal angle which extends symmetrically relative to the longitudinal direction of the robot arm end 34, which angle in the embodiment is approximately 120°. The sensor means 51 are reciprocated by the pivotal means 52, 53 through the pivotal angle in approximately 0.5 second. The stepper motor 53 drives the pivotal mechanism 52, while the pivotal mechanism 52 causes the sensor means 51 to reciprocate with the aid of a belt 57. In addition, under the slide 43 there is arranged a cylinder 58 with the aid of which, with the intermediary of a pivotal mechanism 59, the coupling means 50 can be reciprocated through a pivotal angle which also extends symmetrically relative to the longitudinal direction of the robot arm end 34, which angle in the embodiment is approximately 90°. After the robot arm end 34 has been positioned approximately below the animal's udder, the sensor means 51 can determine the position of the front teats, when the slide 43 has been adjusted to a first position; the position of the slide 43 is then also that wherein, during the coupling procedure, the coupling means 50 can engage the teat cups 47 and 48 in order to connect same to the front teats. When thereafter the slide 43 is moved forwards, it can arrive in a second position in which by means of the sensormeans 51 the position of the rear teats can be determined and in which the coupling means 50 subsequently can engage the teat cups 45 and 46 in order to connect same to the rear teats. This situation is illustrated in Figures 3 to 5. In both the first (front) and the second (rear) position of the slide 43, the coupling means 50 can only engage the teat cups 47, 48, respectively 45, 46, individually. In both positions, the cylinder 58 and the pivotal mechanism 59 can first adjust the coupling means to a position wherein they can, for example, engage the respective teat cups 45 and 47 and thereafter to a position wherein they can engage the respective teat cups 46 and 48. The sensor means 51 continue to be permanently operative in order to detect the teat positions located within the pivotal angle, even during the subsequent upward movement of the teat cups 45 to 48.

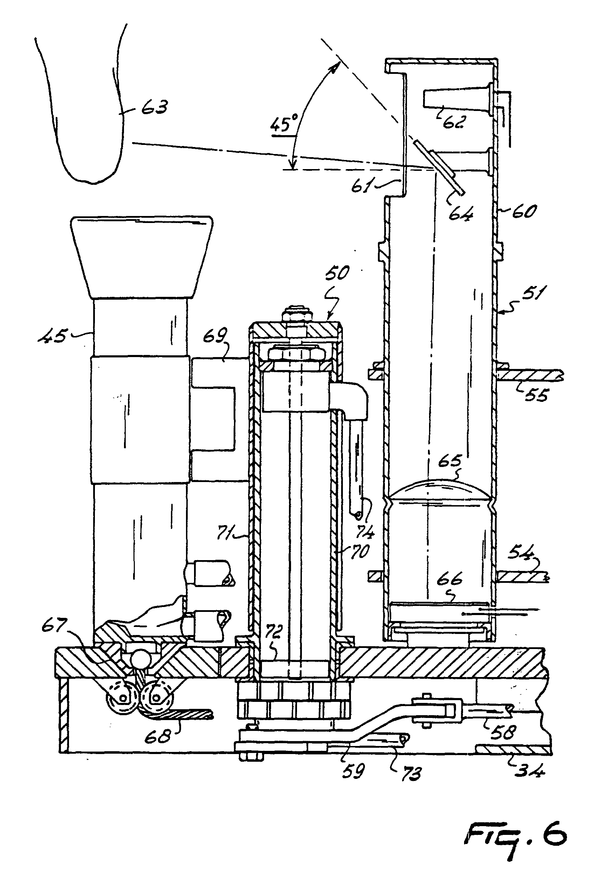

Figure 6 shows the sensor means 51 in further detail; they comprise a housing 60 constituted by a cylindrical sleeve and provided with a laser-transparant window 61 near its upper end. Behind the window 61 there is arranged a transmitter element 62 constituted by a laser, which transmitter element 62 is controlled from the sensor electronics 56. The use of a laserfor the sensor means 51 has the advantage that hereby a much narrower scanning beam as well as a much higher data rate can be obtained. Therefore, the transmitter element 62 is capable of transmitting continuously a narrow scanning beam to determine the position of a teat 63. This teat 63 disperses and/or reflects the radiation transmitted by the transmitter element 62. Via the window 61, a fraction of the radiation returns into the housing 60 and is deflected downwardly by a reflecting element 64, constituted by a flat mirrorand located behind the window 61, and is guided to a receiver element 66 including a diode detector via a converging lens 65 accommodated in the housing 60. The region on the receiver element 66 where the captured beam is focused to a greater or lesser extent, is decisive for the sensor means-teat distance. The signal applied by the receiver element 66 to the sensor electronics 56 is indicative of this focusing region. In the present embodiment, the beam transmitted by the transmitter element 62 extends substantially horizontally and the mirror is arranged at an angle of approximately 45°. The angular position of the teat 63 relative to the robot arm end 34 can further be determined from the time interval in which the reflections are received from the teat 63 during the reciprocating movement of the sensor means 51. From the detected position of a teat 63 with respect to the robot arm end 34 signals are generated by control means (to be described in further detail hereinafter) to adjust the robot arm end 34 to such a position that a relevant teat cup can be connected to the teat 63 by moving it upwardly.

As soon as the robot arm end 34 has arrived in the desired position, a relevant teat cup can be connected. In the present embodiment, the teat cups 45 to 48 bear on the robot arm end 34 in tapering recesses 67. The teat cups 45 to 48 are kept in position therein by flexible connecting members 68 which are coupled to cylinders (not shown) in the fourth part 34 of the robot arm 6. The teat cups 45 to 48 can then be moved freely upwardly and are pulled down again by the said cylinders in their positions in the tapering recesses 67 when the supply of milk stops. The upward movement of the individual teat cups is effected by the coupling means 50 which are provided with an electromagnet 69 which, after having been energized, can engage the teat cup to which the electromagnet 69 is directed at that instant. By rotation of the coupling means 50 and by a change in the position of the slide 43, the electromagnet 69 can be directed to the other teat cups which can then be engaged after energizing of the electromagnet 69. The coupling means 50 include a vertical inner jacket 70 which is connected rigidly to the slide in the upward direction; this inner jacket 70 can be rotated by the pivotal mechanism 59 through the said pivotal angle of, in this embodiment, 90°. The inner jacket 70 is surrounded by an outer jacket 71 which can move only in upward and downward direction. The electromagnet 69 is connected rigidly to this outer jacket 71. The outer jacket 71 is connected rigidly to a piston 72 which extends through the coupling means 50. Compressed air can be applied in the space under the piston 72 via a compressed air supply pipe 73, whereby the outer jacket 71 and the electromagnet 69 connected thereto and the teat cup engaged thereby are moved upwardly. The pressure exerted by the compressed air is such that, as soon as the teat cup contacts the cow's udder and, therefore, a certain counter-pressure is exerted, the upward movement of the teat cup is stopped. When a teat cup has been connected to the relevant teat 63, the electromagnet 69 is de-energized and, consequently, the teat cup is no longer retained thereby. Subsequently, compressed air can be passed into the space above the piston 72 via the compressed air supply pipe 74, as a result of which the outer jacket 71 with the electromagnet 69 connected thereto can be moved downwardly; in this connection, the pressure on the supply pipe 73 must, of course, be less than that on the supply pipe 74.

Figure 7 shows a second arrangement of a laser with the associated sensorelectronis 56. In this case, both the laser 62 and the diode detector 66 with associated electronics are arranged in the lower part of the housing 60. For the pivotal movement of the sensor means 51, the pivotal means are constituted here by a bi-directionally controllable stepper motor 75. The sensor electronics 56 is constituted here by a microprocessor 76, an analog-digital converter 77 and a control circuit 78. The laser 62 is activated from the microprocessor 76. When, during its pivotal movement, the laser moves across an object, such as the teat of an animal's udder, then by the diode 66 there is supplied a signal which is determined by three parameters: the distance d from the sensor means 51 to the object, and the angles α₁ and α₂ which indicate the initial angle and the final angle, respectively, of the laser beam moving across the object; these parameters are shown in Figure 8. The distance d determines the focusing position of the reflected/dispersed laser beam on the diode detector, while the position on the diode detector determines the amplitude of the signal supplied thereby (Figure 7). The angles α₁ and α₂ are determined by the position of the sensor means 51 at the moment when, during its pivotal movement, the laser beam establishes the "beginning" and the "end" of the object; since a pivotal movement, and hence the beginning of a next one, is signalled each time by a signal ES (End Scan), the angles α₁ and α₂ can de determined by establishing each time the score of the counter, wherein is counted the number of steps made by the stepper motor 75 until the occurrence of the edges of the signal from the diode detector. The magnitude of d, α₁ and α₂ is determined in the microprocessor 76; for that purpose, the signal from the diode detector 66 is supplied via the analog-digital converter 77 to the microprocessor 76; with the aid of the latter, the sample frequency of the analog-digital converter 77 is set. In addition, from the diode detector 66 there is supplied to the microprocessor 76 directly a signal indicating that the signal supplied via the analog-digital converter 77 should not be considered a valid one; this signal has a threshold function. The stepper motor 75 is controlled from the microprocessor 76. In this connection, use is made of a control circuit 78, to which are supplied from the microprocessor 76 the following signals: an on/off-signal, a signal for determining the rotational direction of the stepper motor 75, and a series of pulse-shaped signals, of which the number per unit of time determines the rotational speed of the stepper motor 75. The stepper motor 75 includes an inductive recording element 79 for establishing a reference position thereof. When the stepper motor 75 passes this reference position, a signal is supplied by the inductive recording element 79 to the microprocessor 76; this signal is of importance in determining the correct moment at which the various signals are supplied to the control circuit 78.

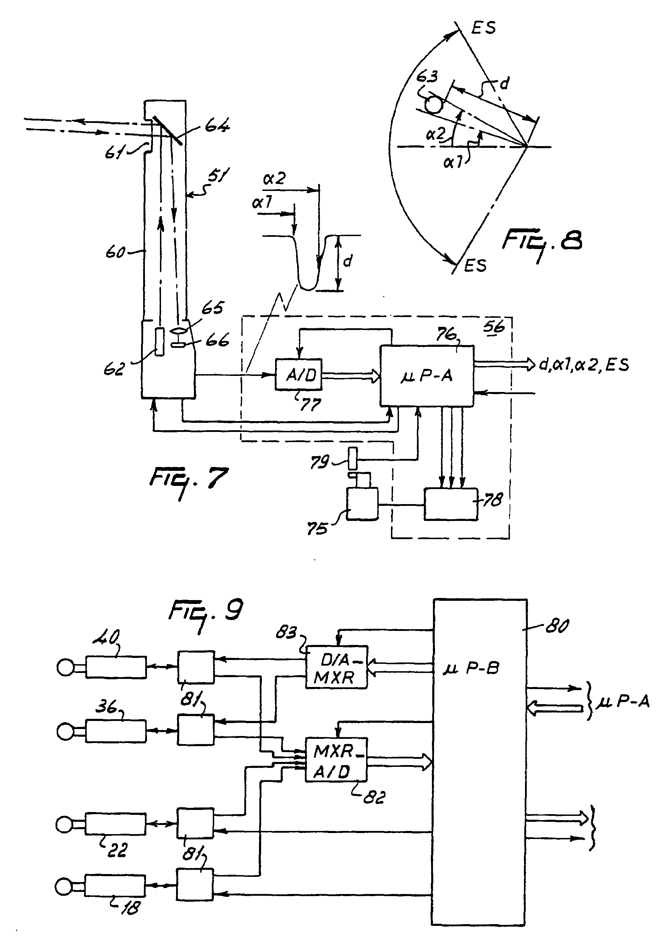

The microprocessor 76 is activated by a second microprocessor 80 (see Figure 9); to this second microprocessor 80 are supplied the values d, α₁ and α₂, as well as the signal ES permanently on interrupt-basis. Each time when on interrupt-basis the data d, α₁ and α₂ and ES are supplied to the second microprocessor 80, the latter sees to it that the position of the cylinder is established. In the second microprocessor 80 are realized the "searching procedure" for roughly determining the position of the teats of the animal's udder relative to a reference position, the "tracking procedure" for accurately determining the position of the teats of the animal's udder relative to a reference position, the control movement by the end of the robot arm to this accurately tracked position, and the connecting of the teat cups. "Roughly determined" does not imply that an inaccurate measurement is made, but that the measurement registers an instantaneous indication; for the teat will be moving continuously.

In determining the position of the teats of the animal's udder, the position of the cylinders 18, 22, 36 and 40 is of importance. Each of these cylinders is provided in a known per se manner with control electronics 81. In roughly adjusting the end 34 of the robot arm 6 in the centre below the animal, the cylinders 18 and 22 are utilized. The adjustment in the longitudinal direction is determined roughly by means of the cylinder 18, while by means of the cylinder 22 is determined roughly the height. The cylinder 22 is also utilized for a searching movement performed by the sensor means 51. In accurately determining and tracking, the cylinders 36 and 40 are utilized. At any moment determined by the microprocessor 80, the actual position of the cylinders 18, 22, 36 and 40 can be supplied via the multiplexer/analog-digital converter 82 to the microprocessor 80 and be registered in memory means thereof. Conversely, at any moment determined by the microprocessor 80, the desired position of the cylinders 36 and 40 can be supplied via the converter/multiplexer 83 to these cylinders 36 and 40. With respect to the cylinders 18 and 22, it will suffice to supply from the microprocessor 80 only two signals to the relevant control electronics 81; by means of these signals can be indicated whether the cylinders 18 and/or 22 have to be activated or stopped, and in what direction the cylinders have to control the end 34 of the robot arm 6. Besides in roughly adjusting the end 34 of the robot arm 6, the cylinder 22 is also utilized in moving the laser in the vertical direction, and hence the end 34 of the robot arm 6 during the "searching procedure" to be described hereinafter. Although this is not of importance here, the further operating units, too, are controlled by the microprocessor 80. The cylinders 18, 20, 22, 26, 36, 40, 49 and 58 can be operable either hydraulically, pneumatically or electromagnetically. Insofar as hydraulically or electromagnetically operable cylinders are utilized, it is strongly desirable to include an additional overload protection against kicks from the animal. In a preferred embodiment, the cylinders 18 and 22 which are relevant to the determination of the position of the teats are electromagnetically operable, while the cylinders 36 and 40 are pneumatically operable, in which connection the control electronics 81 are designed such that these cylinders can reach very quickly a specific position determined by the microprocessor. Servo-pneumatic positioning elements, constituted by a pneumatic cylinder with associated control electronics, are known per se, but in the present implement, in co-operation with a laser in the sensor means, they render it possible for the teat cups to be connected to the teats in an extremely fast and efficient manner.

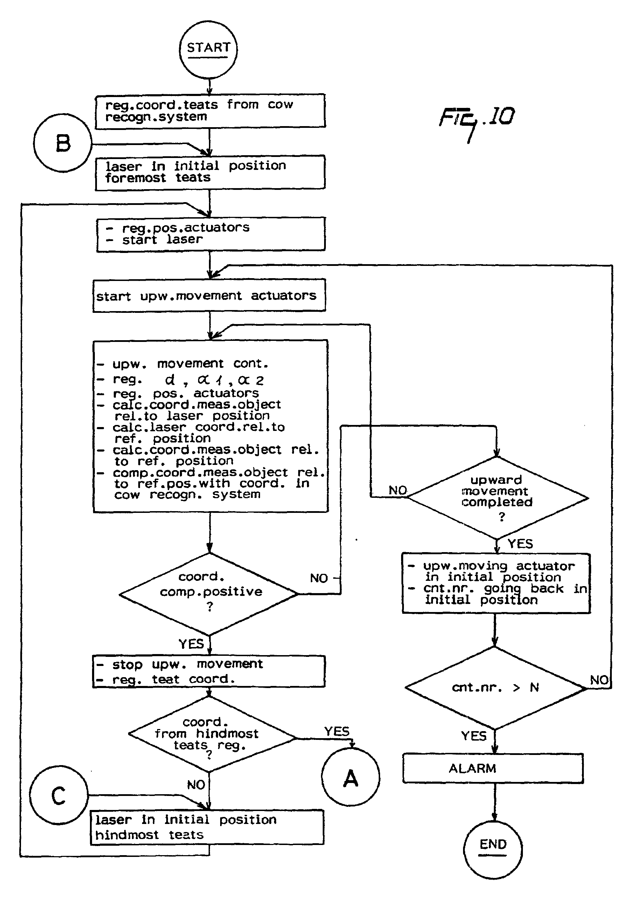

The "searching procedure" as registered in the microprocessor 80 will be set out wit h reference to the flow diagram of Figure 9, while the "tracking procedure" will be set out with reference to the flow diagram of Figure 10.

When the animal arrives in the milking parlour, she will be identified by means of a conventional animal recognition data source. The animal recognition is of importance to the present invention to the extent that thereby is known for each animal the position of the teats of the animal's udder relative to a fixed point on the animal, while, furthermore, this position in the animal recognition data source can be corrected, if necessary, on the basis of the continuously occurring "searching and tracking procedure". For the searching procedure to be described hereinafter it is of importance that is registered the position of the teats relative to a reference position, here a point on the animal's rear centre as determined by the sensor device 4. First of all, the end of the robot arm is brought into such a starting position that the laser, i.e. the point in the aperture of the housing wherein the laser is accommodated and from where the horizontal laser scan movement takes place, is located at a predetermined slight distance below and in the middle in front of the front teats, e.g. 50 mms below the front teats and 120 mms in the middle in front thereof. The then actual position of the cylinders is registered and the laser is started. Then, the cylinder 22 is activated, after which the robot arm end with the laser is moved upwardly, during which movement the laser performs its scanning movement, each scanning movement taking e.g. 0.25 second. During this upward movement, the values d, α₁ and α₂ for the two front teats are registered permanently, as well as the associated position of the cylinder 22. From the values d, α₁ and α₂ is calculated the position, relative to that of the laser, of the objects observed, which are not yet considered as teats. From the position of the cylinders is calculated the position of the laser relative to the reference position. On the basis of the results of the two last calculations is calculated the position of the objects observed relative tothe reference position. Subsequently, this last position is compared with the data regarding this position as derived from the animal recognition data source. Should there be established an agreement within certain limits, then the objects observed are identified as the animal's front teats, this position of the front teats is registered and the upward movement of the cylinder 22 is stopped. Subsequently, the laser is positioned in the starting position below and in the middle in front of the rear teats and the above-described procedure is repeated, after which also the position of the rear teats is registered. This completes the "searching procedure". In case, during the searching procedure, no agreement within certain limits is established between the calculated position of the objects observed and the relevant data from the animal recognition data source, then the searching is continued. Then, the laser is moved higher upwardly and, after having reached its highest position of e.g. 100 mms above its starting position, returns to this starting position in order to perform another searching movement in the vertical direction. When after a number of searching movements still no teats have been identified, an alarm is operated.

After the searching procedure follows the tracking procedure, in which the teats are tracked individually in order to be able to connect a teat cup thereto. In this tracking procedure, the teats are numbered, so that a fixed order can be observed. First, one of the rear teats is tracked; the laser is already in the right starting position therefor, i.e. the position wherein the cylinder 22 has stopped during the search for the rear teats. Here again, the data flow of the laser, i.e. the values d, α₁ and α₂ as well as the position of the relevant cylinders, is registered permanently. From the values d, α₁ and α₂ is calculated continuously the position of the teat relative to the laser and therefrom the difference between the position of the teat relative to the laser and the position of the relevant teat cup relative to the laser; in the present embodiment, these differences Δr, Δϕ are determined in polar coordinates. When these differences are not slight enough, i.e. the teat cup is located not quite below the relevant teat, then the results of the last measurement are compared with the teat position corrected on the basis of the previous measurement; in the present embodiment, the magnitude of these differences is keyed in Cartesian coordinates. When these differences Δx, Δy are less than a certain value of e.g. 35 mms, then the cylinders have to be activated and the relevant teat cup, i.e. the end of the robot arm, has to be dispatched to the lastly determined teat position. This procedure is repeated until the difference between the position of the teat relative to the laser and that of the teat cup relative to the laser is slight enough, so that the teat cup is located almost straight below the relevant teat. The teat cup is then moved upwardly and connected, while by means of a vacuum under the teat it is checked whether the teat cup is connected correctly. During this upward movement of the teat cup, the tracking procedure remains active, so that even then the teat cup can be controlled yet. A vacuum may also occur when the teat cup is not connected correctly, in particular when the teat is folded and the teat cup is pressed thereagainst. Therefore, the check whether the teat cup is connected correctly can be made by means of a temperature measurement; for in the milk flow there is measured a higher temperature than thereoutside.

From the finally registered position of the teat cup at the moment of connection and the mutual position of the teats, as can be obtained from the teat position determination in the searching procedure, there can be obtained a corrected initial position of the laser for the tracking of the second rearteat. After the laser has been brought in this corrected initial position, the above-described tracking procedure is repeated and the second teat cup can be connected. Likewise, the third and fourth teat cups are connected, after which the tracking procedure is completed. When during the tracking procedure it is established that the differences Δx, Δy are too great, i.e. in the present embodiment more than 35 mms, then the relevant cylinders are not activated, the control of the teat cup is omitted and the tracking procedure is repeated. When this has been done for a number of times and the differences Δx, Δy continue to be too great, then the searching procedure is returned to, i.e. to the point where the search for the front teats or the rear teats is initiated.

The invention is not limited to the embodiment described in the foregoing. It will be obvious that many different modifications are possible, and it should be noted that, alternatively, two transmitter elements constituted by lasers can be used instead of one transmitter element.

## Claims

1. An implement for milking an animal, e.g. a cow, which implement includes a robot arm (6) adapted to carry on its end portion (34) teat cups (45 to 48), and coupling means (50) for applying each teat cup to a relevant teat of the animal's udder, while furthermore there are provided sensor means (51) arranged on a movable member (43) provided on the robot arm end portion (34), with the aid of which sensor means (51) the position of the teats can be determined, as well as control means (56, 18, 22, 36, 40, 80 to 83) for conveying, on the basis of a teat position as determined by the sensor means (51), the robot arm (6) in such a position under the animal's udder that a teat cup (45 to 48) can be applied to the relevant teat, **characterized in that** the movable member (43) is displaceable along the robot arm end portion (34) in the longitudinal direction thereof relative to said teat cups (45 to 48) into at least two defined sensor active positions during the time that the teat cups (45 to 48) are still carried by the robot arm end portion (34).

2. An implement as claimed in claim 1, **characterized in that** the movable member (43) is constituted by a slide.

3. An implement as claimed in claim 1 or 2, **characterized in that** the sensor means (51) are arranged rotatably on the movable member (43).

4. An implement as claimed in claim 3, **characterized in that** the sensor means (51) are provided pivotably on the movable member (43).

5. An implement as claimed in any one of the preceding claims, **characterized in that** the movable member (43) can be adjusted to a first position wherein, by means of the sensor means (51), the position of the front teats can be determined and to a second position for the position of the rear teats.

6. An implement as claimed in any one of the preceding claims, **characterized in that** the movable member (43) is provided with pivotal means (13, 14; 75), with the aid of which the sensor means (51) are pivotal through an angle which extends symmetrically relative to the longitudinal direction of the robot arm end (34).

7. An implement as claimed in claim 6, **characterized in that** the pivotal angle of the sensor means (51) is preferably in a range from 90° to 150°, and in particular amounts to approximately 120°.

8. An implement as claimed in claim 6 or 7, **characterized in that** the pivotal means are constituted by a stepper motor (53) and a pivotal mechanism (52) for the sensor means (51) driven thereby or by a bi-directionally controllable stepper motor (75).

9. An implement as claimed in any one of the preceding claims, **characterized in that** the sensor means (51) comprise at least one transmitter element (62) accommodated in a housing (60) which is secured on the movable member (43) and includes a window (61), the scanning beam transmitted by the transmitter element (62) being directed through the window and across the teat cups (45 to 48) carried by the robot arm end (34).

10. An implement as claimed in claim 9, **characterized in that** the scanning beam extends substantially horizontally.

11. An implement as claimed in claim 9 or 10, **characterized in that** the transmitter element (62) is constituted by a laser.

12. An implement as claimed in any one of claims 9 to 11, **characterized in that** the housing (60) accommodates a receiver element (66) for detecting, through the window (61) provided therein, a fraction of the scanning beam radiation dispersed by and/or reflected from an object, more specifically a teat of the animal's udder.

13. An implement as claimed in claim 12, **characterized in that** there is provided in the housing (60), behind the window (61) therein, a reflecting element (64) for guiding the radiation incident into the housing (60) through the window (61) downwardly to the receiver element (66) arranged in the lower part thereof.

14. An implement as claimed in claim 13, **characterized in that** between the reflecting element (64) and the receiver element (66) there is arranged a converging lens (65).

15. An implement as claimed in any one of claims 11 to 14, **characterized in that** the receiver element (66) is constituted by a diode detector.

16. An implement as daimed in any one of the preceding claims, **characterized in that** the coupling means (50) are arranged on the movable member (43).

17. An implement as claimed in any one of the preceding claims, **characterized in that** the coupling means (50) are arranged on the movable member (43) near its end in front of the sensor means (51).

18. An implement as claimed in claim 16 or 17, **characterized in that** the coupling means (50) are arranged pivotably on the movable member (43).

19. An implement as claimed in claim 18, **characterized in that** further pivotal means (59) are provided on the movable member (43), with the aid of which the coupling means (50) are pivotal through a pivotal angle which extends symmetrically relative to the longitudinal direction of the robot arm end portion (34) between two angular positions.

20. An implement as claimed in claim 19, **characterized in that** the pivotal means (58, 59) for the coupling means (50) are constituted by a cylinder (58) connected to the movable member (43), by means of which cylinder a pivotal mechanism (59) provided on the lower part of the coupling means (50) is controlled.

21. An implement as claimed in any one of claims 16 to 20, **characterized in that** the movable member (43) can be adjusted to a first position in which the position of the rear teats can be determined with the aid of the sensor means (51) and in which the coupling means (50) can engage the respective teat cups (47, 48) to be placed on the rear teats in angular positions determined by the pivotal means (58, 59) of the coupling means (50). and to a second position in which the position of the front teats can be determined with the aid of the sensor means (51) and in which the coupling means (50) can engage the respective teat cups (45, 46) to be placed on the front teats in the said angular positions.

22. An implement as claimed in any one of claims 16 to 21, **characterized in that** the coupling means (50) include an electromagnet (69) and engage a teat cup (45 to 48) after the electromagnet has been energized.

23. An implement as claimed in claim 22, **characterized in that** the coupling means (50) include an outer jacket (71) to which the electromagnet (69) is fitted, as well as a vertical inner jacket (70) which is connected rigidly to the movable member(43), whereby it is possible for the outer jacket (71) with the electromagnet (69) to be moved in the upward direction.

24. An implement as claimed in any one of the preceding claims, **characterized in that** on the movable member (43) there are provided the control electronics and the data processing electronics (56), respectively, forthe transmitter and receiver elements associated with the sensor means.

25. An implement as claimed in any one of the preceding claims, **characterized in that** the sensor means (51) comprise a source of electromagnetic radiation, such as a laser or a source of infrared radiation.

26. An implement as claimed in claim 25, **characterized in that** the sensor means (51) comprise a transmitter element (62) constituted by a laser, as well as a receiving element (66) constituted by a diode detector.

27. An implement as claimed in claim 25 or 26, **characterized in that** the housing (60) of the sensor means (51) is arranged on the end (34) of a robot arm (6) which can carry also one or more teat cups (45 to 48) and is pivotable below the animal's udder.

28. An implement as claimed in any one of the preceding claims, **characterized in that** the sensor means (51) comprise two sensor elements which can be arranged besides each other in such a manner that two distance measurements can be performed in a substantially horizontal plane.

29. An implement as claimed in any one of the preceding claims, **characterized in that** the cylinders (36, 40) for the robot arm (6) are constituted by servo-pneumatic positioning elements.

30. A method of connecting teat cups to the teats of the udder of an animal, e.g. a cow, in which method, with the aid of sensor means (51), the position of the teats is determined and a robot arm end (34) comprising teat cups (45 to 48) is moved by means of cylinders to such a position that the teat cups (45 to 48) can be connected to the teats by a substantially upward movement of the relevant teat cups, **characterized in that** the sensor means (51) are arranged on a member (43) provided on the robot arm end portion (34), and being, movable relative to the robot arm end portion (34) and that in a first phase the movable member (43) is brought into a first position in which the sensor means (51) determine the position of a first pair of teats, after which the sensor means (51) are brought in a second position in which the sensor means (51) determine the position of a second pair of teats and the determined teat positions are compared, in a manner known per se, with data regarding the position of the teats from an animal recognition data source, and in a second phase, with the aid of said sensor means (51), each of the teat cups is moved to a position wherein the teat cup can be connected to the relevant teat.

## Patentansprüche

1. Vorrichtung zum Melken eines Tieres, z.B. einer Kuh, mit einem Roboterarm (6), der an seinem Endteil (34) Zitzenbecher (45 bis 48) sowie Anschlussmittel (50) zum Anbringen jedes Zitzenbechers an eine betreffende Zitze des Tiereuters trägt, und weiterhin mit einer Sensorvorrichtung (51), die auf einem Stellglied (43) angeordnet ist, das auf dem Endteil (34) des Roboterarmes vorgesehen ist, mit deren Hilfe die Lage der Zitzen feststellbar ist, sowie mit einer Steuereinrichtung (56, 18, 22, 36, 40, 80 bis 83), mittels der der Roboterarm (6) auf der Basis einer von der Sensorvorrichtung (51) ermittelten Zitzenlage in eine solche Position unter dem Tiereuter zu führen ist, dass ein Zitzenbecher (45 bis 48) an die betreffende Zitze angebracht werden kann, **dadurch gekennzeichnet, dass** das Stellglied (43) an dem Endteil (34) des Roboterarmes entlang in Längsrichtung des Endteiles (34) relativ zu den Zitzenbechern (45 bis 48) in mindestens zwei definierte Abtaststellungen bewegbar ist, während die Zitzenbecher (45 bis 48) noch von dem Endteil (34) des Roboterarmes getragen sind.

2. Vorrichtung nach Anspruch 1, **dadurch gekennzeichnet, dass** das Stellglied (43) ein Gleitstück ist.

3. Vorrichtung nach Anspruch 1 oder 2, **dadurch gekennzeichnet, dass** die Sensorvorrichtung (51) auf dem Stellglied (43) drehbar angeordnet ist.

4. Vorrichtung nach Anspruch 3, **dadurch gekennzeichnet, dass** die Sensorvorrichtung (51) auf dem Stellglied (43) schwenkbar angeordnet ist.

5. Vorrichtung nach einem der vorhergehenden Ansprüche, **dadurch gekennzeichnet, dass** das Stellglied (43) in eine erste Position, in der die Lage der vorderen Zitzen mittels der Sensorvorrichtung (51) zu bestimmen ist, und in eine zweite Position für die Lage der hinteren Zitzen einstellbar ist.

6. Vorrichtung nach einem der vorhergehenden Ansprüche, **dadurch gekennzeichnet, dass** das Stellglied (43) mit einer Schwenkeinrichtung (13, 14; 75) versehen ist, mit der die Sensorvorrichtung (51) innerhalb eines Sektors schwenkbar ist, der symmetrisch zur Längsachse des Endteiles (34) des Roboterarmes liegt.

7. Vorrichtung nach Anspruch 6, **dadurch gekennzeichnet, dass** der Schwenkwinkel der Sensorvorrichtung (51) vorzugsweise in einem Bereich von 90° bis 150° liegt, insbesondere etwa 120° beträgt.

8. Vorrichtung nach Anspruch 6 oder 7, **dadurch gekennzeichnet, dass** die Schwenkeinrichtung einen Schrittmotor (53) und eine für die Sensorvorrichtung (51) vorgesehene Schwenkvorrichtung (52) aufweist, die von dem Schrittmotor oder einem reversierbar gesteuerten Schrittmotor (75) angetrieben ist.

9. Vorrichtung nach einem der vorhergehenden Ansprüche, **dadurch gekennzeichnet, dass** die Sensorvorrichtung (51) mindestens ein Sendeelement (62) enthält, das sich in einem Gehäuse (60) befindet, welches an dem Stellglied (43) befestigt ist und ein Fenster (61) aufweist, und dass der von dem Sendeelement (62) ausgesendete Abtaststrahl durch das Fenster hindurch und quer zu den Zitzenbechern (45 bis 48) gerichtet ist, die von dem Endteil (34) des Roboterarmes getragen sind.

10. Vorrichtung nach Anspruch 9, **dadurch gekennzeichnet, dass** der Abtaststrahl im wesentlichen horizontal gerichtet ist.

11. Vorrichtung nach Anspruch 9 oder 10, **dadurch gekennzeichnet, dass** das Sendeelement (62) durch einen Laser gebildet ist.

12. Vorrichtung nach einem der Ansprüche 9 bis 11, **dadurch gekennzeichnet, dass** das Gehäuse (60) ein Empfangselement (66) enthält, das durch das Fenster (61) des Gehäuses hindurch einen Teil des Abtaststrahlenbündels aufnimmt, welches von einem Objekt, insbesondere von einer Zitze des Tiereuters, zerstreut und/oder reflektiert wurde.

13. Vorrichtung nach Anspruch 12, **dadurch gekennzeichnet, dass** in dem Gehäuse (60) hinter dessen Fenster (61) ein Reflektorelement (64) angeordnet ist, das die in das Gehäuse (60) durch das Fenster (61) hindurch einfallende Strahlung nach unten zu dem Empfangselement (66) umlenkt, das sich im unteren Teil des Gehäuses befindet.

14. Vorrichtung nach Anspruch 13, **dadurch gekennzeichnet, dass** zwischen dem Reflektorelement (64) und dem Empfangselement (66) eine Sammellinse (65) angeordnet ist.

15. Vorrichtung nach einem der Ansprüche 11 bis 14, **dadurch gekennzeichnet, dass** das Empfangselement (66) durch einen Diodendetektor gebildet ist.

16. Vorrichtung nach einem der vorhergehenden Ansprüche, **dadurch gekennzeichnet, dass** an dem Stellglied (43) Anschlussmittel (50) angeordnet sind.

17. Vorrichtung nach einem der vorhergehenden Ansprüche, **dadurch gekennzeichnet, dass** die Anschlussmittel (50) an dem Stellglied (43) nahe dessen Ende vor der Sensorvorrichtung (51) angeordnet sind.

18. Vorrichtung nach Anspruch 16 oder 17, **dadurch gekennzeichnet, dass** die Anschlussmittel (50) an dem Stellglied (43) schwenkbar angeordnet sind.

19. Vorrichtung nach Anspruch 18, **dadurch gekennzeichnet, dass** an dem Stellglied (43) eine weitere Schwenkvorrichtung (59) angeordnet ist, mittels der die Anschlussmittel (50) innerhalb eines Sektors schwenkbar sind, der sich zwischen zwei Winkelpositionen symmetrisch in bezug auf die Längsrichtung des Roboterarm-Endteiles (34) erstreckt.

20. Vorrichtung nach Anspruch 19, **dadurch gekennzeichnet, dass** die Schwenkvorrichtung (58, 59) für die Anschlussmittel (50) durch einen Zylinder (58) gebildet ist, der mit dem Stellglied (43) verbunden ist, und dass mittels des Zylinders eine am unteren Ende der Anschlussmittel (50) vorgesehene Schwenkvorrichtung (59) gesteuert wird.

21. Vorrichtung nach einem der Ansprüche 16 bis 20, **dadurch gekennzeichnet, dass** das Stellglied (43) in eine erste Position einstellbar ist, in der die Lage der hinteren Zitzen mittels der Sensorvorrichtung (51) erfassbar ist und die Anschlussmittel (50) die betreffenden Zitzenbecher (47, 48) ergreifen können, die an den hinteren Zitzen in Winkelpositionen anzubringen sind, welche durch die Schwenkvorrichtung (58, 59) bestimmt sind, und dass das Stellglied (43) in eine zweite Position einstellbar ist, in der die Lage der vorderen Zitzen mittels der Sensorvorrichtung (51) erfassbar ist und die Anschlussmittel (50) die betreffenden Zitzenbecher (45, 46) ergreifen können, die an den vorderen Zitzen in den genannten Winkelstellungen anzubringen sind.

22. Vorrichtung nach einem der Ansprüche 16 bis 21, **dadurch gekennzeichnet, dass** die Anschlussmittel (50) einen Elektromagneten (69) enthalten und einen Zitzenbecher (45 bis 48) ergreifen, nachdem der Elektromagnet erregt ist.

23. Vorrichtung nach Anspruch 22, **dadurch gekennzeichnet, dass** die Anschlussmittel (50) eine äussere Hülse (71), an der der Elektromagnet (69) angebracht ist, und eine vertikale innere Hülse (70) aufweisen, die mit dem Stellglied (43) starr verbunden ist, wobei die äussere Hülse (71) mit dem Elektromagneten (69) aufwärts bewegbar ist.

24. Vorrichtung nach einem der vorhergehenden Ansprüche, **dadurch gekennzeichnet, dass** an dem Stellglied (43) die Steuerelektronik und die Datenprozessor-Elektronik für das Sender- bzw. das Empfänger-Element der Sensorvorrichtung angeordnet sind.

25. Vorrichtung nach einem der vorhergehenden Ansprüche, **dadurch gekennzeichnet, dass** die Sensorvorrichtung (51) eine elektromagnetische Strahlungsquelle aufweist, wie einen Laser oder eine Infrarot-Strahlungsquelle.

26. Vorrichtung nach Anspruch 25, **dadurch gekennzeichnet, dass** die Sensorvorrichtung (51) ein von einem Laser gebildetes Sendeelement (62) und ein Empfangselement (66) aufweist, das von einem Diodendetektor gebildet ist.

27. Vorrichtung nach Anspruch 25 oder 26, **dadurch gekennzeichnet, dass** das Gehäuse (60) der Sensorvorrichtung (51) am Ende (34) eines Roboterarmes (6) angeordnet ist, das ausserdem einen oder mehrere Zitzenbecher (45 bis 48) tragen kann, und das unter das Tiereuter schwenkbar ist.

28. Vorrichtung nach einem der vorhergehenden Ansprüche, **dadurch gekennzeichnet, dass** die Sensorvorrichtung (51) zwei Sensorelemente aufweist, die derart nebeneinander anzuordnen sind, dass zwei Entfernungsmessungen in einer im wesentlichen horizontalen Ebene ausführbar sind.

29. Vorrichtung nach einem der vorhergehenden Ansprüche, **dadurch gekennzeichnet, dass** die Zylinder (36, 40) für den Roboterarm (6) als servopneumatische Positionierelemente ausgebildet sind.

30. Verfahren zum Anbringen von Zitzenbechern an den Zitzen des Euters eines Tieres, z.B. einer Kuh, bei dem mittels einer Sensorvorrichtung (51) die Lage der Zitzen ermittelt und ein Roboterarm-Ende (34) mit Zitzenbechern (45 bis 48) mittels Zylindern in eine solche Position bewegt wird, dass die Zitzenbecher (45 bis 48) mittels einer im wesentlichen aufwärts gerichteten Bewegung der betreffenden Zitzenbecher an die Zitzen anzulegen sind, **dadurch gekennzeichnet, dass** die Sensorvorrichtung (51) auf einem Stellglied (43) angeordnet ist, das auf dem Endteil (34) des Roboterarmes vorgesehen ist und relativ zu dem Endteil (34) des Roboterarmes bewegbar ist, und dass in einer ersten Phase das Stellglied (43) in eine erste Position bewegt wird, in der die Sensorvorrichtung (51) die Lage eines ersten Zitzenpaares ermittelt, worauf die Sensorvorrichtung (51) in eine zweite Position bewegt wird, in der die Sensorvorrichtung (51) die Lage eines zweiten Zitzenpaares ermittelt und die ermittelten Lagen der Zitzen in an sich bekannter Weise mit Daten einer die Lage der Zitzen betreffenden Tiererkennungs-Datenquelle verglichen werden, und dass in einer zweiten Phase mittels der Sensorvorrichtung (51) jeder Zitzenbecher in eine Position bewegt wird, in der er an die betreffende Zitze angelegt werden kann.

## Revendications

1. Machine pour traire un animal, par exemple une vache, cette machine comprenant un bras de robot (6) adapté pour porter sur sa partie terminale (34) des godets de trayons (45 à 48) et des moyens de couplage (50) pour appliquer chaque godet de trayon à un trayon correspondant du pis de l'animal, tandis que sont en outre prévus des moyens détecteurs (51) disposés sur un organe mobile (43) prévu sur la partie terminale (34) du bras de robot, à l'aide desquels moyens détecteurs (51) la position des trayons peut être déterminée, ainsi que des moyens de commande (56, 18, 22, 36, 40, 80 à 83) pour conduire, d'après une position d'un trayon telle que déterminée par les moyens détecteurs (51), le bras de robot (6) en une position sous le pis de l'animal telle qu'un godet de trayon (45 à 48) puisse être appliqué au trayon correspondant, **caractérisée en ce que** l'organe mobile (43) est mobile le long de la partie terminale (34) du bras de robot dans le sens longitudinal de ladite partie terminale par rapport auxdits godets de trayons (45 à 48) pour parvenir en au moins deux positions actives de détection définies pendant le temps où les godets de trayons (45 à 48) sont encore portés par la partie terminale (34) du bras de robot.

2. Machine selon la revendication 1, **caractérisée en ce que** l'organe mobile (43) est constitué par un coulisseau.

3. Machine selon la revendication 1 ou 2, **caractérisée en ce que** les moyens détecteurs (51) sont montés pivotants sur l'organe mobile (43).

4. Machine selon la revendication 3, **caractérisée en ce que** les moyens détecteurs (51) sont prévus pivotants sur l'organe mobile (43).

5. Machine selon l'une quelconque des revendications précédentes, **caractérisée en ce que** l'organe mobile (43) peut être réglé sur une première position dans laquelle, au moyen des moyens détecteurs (51), la position des trayons antérieurs pourra être déterminée et sur une deuxième position pour localiser les trayons postérieurs.

6. Machine selon l'une quelconque des revendications précédentes, **caractérisée en ce que** l'organe mobile (43) est muni de moyens pivotants (13, 14; 75) à l'aide desquels les moyens détecteurs (51) sont pivotants sur un angle qui s'étend symétriquement par rapport au sens longitudinal de l'extrémité (34) du bras de robot.

7. Machine selon la revendication 6, **caractérisée en ce que** l'angle de pivotement des moyens détecteurs (51) est de préférence de l'ordre de 90° à 150°, et en particulier est approximativement de 120°.

8. Machine selon la revendication 6 ou 7, **caractérisée en ce que** les moyens de pivotement sont constitués par un moteur pas-à-pas (53) et un mécanisme de pivotement (52) pour les moyens détecteurs (51), entraîné par ce moteur ou par un moteur pas-à-pas (75) pouvant être commandé dans les deux sens.

9. Machine selon l'une quelconque des revendications précédentes, **caractérisée en ce que** les moyens détecteurs (51) comprennent au moins un élément émetteur (62) logé dans un boîtier (60) qui est fixé sur l'organe mobile (43) et qui comporte une fenêtre (61), le faisceau de balayage émis par l'élément émetteur (62) étant dirigé à travers la fenêtre et transversalement aux godets de trayons (45 à 48) portés par l'extrémité (34) du bras de robot.

10. Machine selon la revendication 9, **caractérisée en ce que** le faisceau de balayage s'étend sensiblement horizontalement.

11. Machine selon la revendication 9 ou 10, **caractérisée en ce que** l'élément émetteur (62) est constitué par un laser.

12. Machine selon l'une quelconque des revendications 9 à 11, **caractérisée en ce que** le boîtier (60) contient un élément récepteur (66) pour détecter à travers la fenêtre (61) prévue dans ce boîtier, une fraction du rayonnement du faisceau de balayage dispersée et/ou réfléchie par un objet, plus spécifiquement par un trayon du pis de l'animal.

13. Machine selon la revendication 12, **caractérisée en ce qu'**il est prévu dans le boîtier (60), derrière la fenêtre (61) de celui-ci, un élément réflecteur (64) pour guider le rayonnement incident dans le boîtier (60) à travers la fenêtre (61) vers le bas, vers l'élément récepteur (66) disposé dans la partie inférieure du boîtier.

14. Machine selon la revendication 13, **caractérisée en ce qu'**une lentille convergente (65) est disposée entre l'élément réflecteur (64) et l'élément récepteur (66).

15. Machine selon l'une quelconque des revendications 11 à 14, **caractérisée en ce que** l'élément récepteur (66) est constitué par un détecteur à diode.

16. Machine selon l'une quelconque des revendications précédentes, **caractérisée en ce que** les moyens de couplage (50) sont disposés sur l'organe mobile (43).

17. Machine selon l'une quelconque des revendications précédentes, **caractérisée en ce que** les moyens de couplage (50) sont disposés sur l'organe mobile (43) près de son extrémité, en avant des moyens détecteurs (51).

18. Machine selon la revendication 16 ou 17, **caractérisée en ce que** les moyens de couplage (50) sont montés pivotants sur l'organe mobile (43).

19. Machine selon la revendication 18, **caractérisée en ce que** d'autres moyens de pivotement (59) sont prévus sur l'organe mobile (43), à l'aide desquels les moyens de couplage (50) sont pivotants selon un angle de pivotement qui s'étend symétriquement par rapport au sens longitudinal de la partie terminale (34) du bras de robot, entre deux positions angulaires.

20. Machine selon la revendication 19, **caractérisée en ce que** les moyens de pivotement (58, 59) pour les moyens de couplage (50) sont constitués par un vérin (58) relié à l'organe mobile (43), au moyen duquel vérin est commandé un mécanisme de pivotement (59) prévu sur la partie inférieure des moyens de couplage (50).

21. Machine selon l'une quelconque des revendications 16 à 20, **caractérisée en ce que** l'organe mobile (43) peut être réglé sur une première position dans laquelle la position des trayons postérieurs pourra être déterminée à l'aide des moyens détecteurs (51) et dans laquelle les moyens de couplage (50) peuvent engager les godets de trayons respectifs (47, 48) à se placer sur les trayons postérieurs dans des positions angulaires déterminées par les moyens de pivotement (58, 59) des moyens de couplage (50), et sur une deuxième position dans laquelle la position des trayons antérieurs pourra être déterminée à l'aide des moyens détecteurs (51) et dans laquelle les moyens de couplage (50) peuvent engager les godets de trayons respectifs (45, 46) à se placer sur les trayons antérieurs dans lesdites positions angulaires.

22. Machine selon l'une quelconque des revendications 16 à 21, **caractérisée en ce que** les moyens de couplage (50) comportent un électro-aimant (69) et engagent un godet de trayon (45 à 48) après que l'électro-aimant a été excité.

23. Machine selon la revendication 22, **caractérisée en ce que** les moyens de couplage (50) comportent une enveloppe extérieure (71) sur laquelle est monté l'électro-aimant (69), ainsi q'une enveloppe intérieure verticale (70) qui est reliée rigidement à l'organe mobile (43), ce qui permet de mouvoir vers le haut l'enveloppe extérieure (71 ) avec l'électro-aimant (69).

24. Machine selon l'une quelconque des revendications précédentes, **caractérisée en ce que** sur l'organe mobile (43) sont prévus l'électronique de commande et l'électronique de traitement de données (56), respectivement, pour les éléments émetteur et récepteur associés aux moyens détecteurs.

25. Machine selon l'une quelconque des revendications précédentes, **caractérisée en ce que** les moyens détecteurs (51) comprennent une source de rayonnement électromagnétique telle qu'un laser, ou une source de rayonnement infrarouge.

26. Machine selon la revendication 25, **caractérisée en ce que** les moyens détecteurs (51) comprennent un élément émetteur (62) constitué par un laser, ainsi qu'un élément récepteur (62) constitué par un détecteur à diode.

27. Machine selon la revendication 25 ou 26, **caractérisée en ce que** le boîtier (60) des moyens détecteurs (51) est disposé sur l'extrémité (34) d'un bras de robot (6) qui peut porter aussi un ou plusieurs godets de trayons (45 à 48) et qui est pivotant sous le pis de l'animal.

28. Machine selon l'une quelconque des revendications précédentes, **caractérisée en ce que** les moyens détecteurs (51) comprennent deux éléments détecteurs qui peuvent être disposés côte à côte de telle manière que deux mesures de distance puissent être exécutées dans un plan sensiblement horizontal.

29. Machine selon l'une quelconque des revendications précédentes, **caractérisée en ce que** les vérins (36, 40) pour le bras de robot (6) sont constitués par des éléments positionneurs servo-pneumatiques.

30. Procédé pour relier des godets de trayons aux trayons du pis d'un animal, par exemple une vache, dans lequel procédé la position des trayons est déterminée à l'aide de moyens détecteurs (51), et une extrémité (34) d'un bras de robot comprenant des godets de trayons (45 à 48) est mue au moyen de vérins jusqu'en une position telle que les godets de trayons (45 à 48) puissent être reliés aux trayons par un mouvement des godets de trayons correspondants, substantiellement vers le haut, **caractérisé en ce que** les moyens détecteurs (51) sont disposés sur un organe mobile (43) prévu sur la partie terminale (34) du bras de robot et mobile par rapport à la partie terminale (34) du bras de robot, et **en ce que**, dans une première phase, l'organe mobile (43) est conduit en une première position dans laquelle les moyens détecteurs (51) déterminent la position d'une première paire de trayons, après quoi les moyens détecteurs (51) sont conduits en une deuxième position dans laquelle les moyens détecteurs (51) déterminent la position d'une deuxième paire de trayons et les positions des trayons déterminées sont comparees, d'une manière connue en soi, avec des données concernant la position des trayons, d'après une source de données de reconnaissance des animaux, et dans une deuxième phase, à l'aide desdits moyens détecteurs (51), chacun des godets de trayons est entraîné vers une position dans laquelle le godet de trayon pourra être relié au trayon correspondant.
